**Europäisches Patentamt**

**European Patent Office**

**Office européen des brevets**

(11) Veröffentlichungsnummer: **0 321 741**

**A1**

## EUROPÄISCHE PATENTANMELDUNG

(21) Anmeldenummer: **88119844.4**

(22) Anmeldetag: **29.11.88**

(51) Int. Cl.4: **A01G 9/10**

(30) Priorität: **19.12.87 DE 3743299**

(43) Veröffentlichungstag der Anmeldung:
**28.06.89 Patentblatt 89/26**

(84) Benannte Vertragsstaaten:
**AT CH DE ES FR GB LI NL SE**

(71) Anmelder: **PELARGONIEN - FISCHER KG**
**Am Scheid**
**D-5416 Hillscheid(DE)**

(72) Erfinder: **Fischer, Gerhard**
**Auf den Dorfwiesen**
**D-5416 Hillscheid(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Verfahren und Vorrichtung zur Kultur von durch vegetative Vermehrung erzeugter Pflanzenstecklinge.**

(57) Die Erfindung betrifft ein Verfahren zur Kultur von durch vegetative Vermehrung erzeugter Pflanzenstecklinge, die mit ihrer Basis in je ein Substrat gesteckt und darin bewurzelt werden, wobei als Wachstumsparameter Lichtmengen, Lichtwerte, Temperatur, Lüftung, Luftfeuchtigkeit, Ernährung und Bewässerung gesteuert werden. Die Erfindung betrifft ferner eine Vorrichtung zur Durchführung dieses Kulturverfahrens. Um unter Meidung der o.g. Nachteile ein verbessertes Verfahren zur Anzucht von Pflanzenstecklingen und eine geeignete Vorrichtung zur Durchführung dieses Verfahrens zu entwickeln, mit dem die Wurzelbildungs- und Wachstumsbedingungen begünstigt werden und ein höherer Flächenbesatz ermöglicht ist, wird vorgeschlagen, daß die im Substrat angeordneten Pflanzenstecklinge in einer Schale, Wanne oder dgl. flachen Gefäß (1) angeordnet werden, in welchem eine Bewässerung der Pflanzenstecklinge von unten durch Einstellung und Aufrechterhaltung eines bestimmten Wasserstandes im Gefäß vorgenommen wird.

EP 0 321 741 A1

## Verfahren und Vorrichtung zur Kultur von durch vegetative Vermehrung erzeugter Planzenstecklinge

Die Erfindung betrifft ein Verfahren zur Kultur von durch vegatative Vermehrung erzeugter Pflanzenstecklinge, die mit ihrer Basis in je ein Substrat gestreckt und darin bewurzelt werden, wobei als Wachstumsparameter Lichtmengen, Lichtwerte, Temperatur, Lüftung, Luftfeuchtigkeit, Ernährung und Bewässerung gesteuert werden. Die Erfindung betrifft ferner eine Vorrichtung zur Durchführung dieses Kulturverfahrens.

Im Rahmen der Anzucht von beblätterten Pflanzenstecklingen spielt für die Wurzelbildung sowie das Wachstum die Bewässerung eine maßgebliche Rolle. Durch das anfängliche Fehlen von Wurzeln ist der Wasserhaushalt bei allen Stecklingen empfindlich gestört. An der Schnitt- oder Bruchfläche, d.h. der Stecklingsbasis, findet nur eine stark reduziert Wasseraufnahme statt. Man ist daher in der Vergangenheit von der Überlegung ausgegangen, die Bewurzelung dadurch zu beschleunigen, daß zur Bewässerung ein Sprühnebelverfahren angewandt wird. Dazu werden die im Substrat stehenden Stecklinge in der Regel in Großraum-Gewächshäusern auf Tischen angeordnet, über denen die Düsen von Sprühnebelanlagen positioniert sind und unter denen Einrichtungen zur Beheizung zur Einstellung des Bewurzelungsklimas vorgesehen sind. Die bisherigen technischen Einrichtungen im Rahmen der Kultur von Stecklingen bestanden demzufolge aus Beleuchtungsanlagen, Belüftungen, Untertischheizungen und Sprühnebelanlagen zur Bewässerung von oben. Das derart durchgeführte Kulturverfahren mit Bewässerung von oben entspricht nachteiligerweise nicht den neueren Erkentnissen über die Einstellung optimaler Anzucht- und Wachstumsbedingungen. Die in der Regel vollautomatische Steuerung der Wasserversprühung sorgt dafür, daß in Abhängigkeit von verschiedenen Meßparametern in zeitlichen Abständen ein Sprühnebel erzeugt wird, der in gewissen Intervallen aufrechterhalten und abgestellt wird, in der Regel, bis eine hohe Luftfeuchtigkeit im Gewächshaus eingetreten ist und der Streckling turgeszent ist, d.h. nicht mehr welkt. Danach bedeutet jede vorgenommene Bewässerung von oben einen Stress für die Strecklinge, da schockartig die momentanen Wachstumsbedingungen für die Zeitdauer der Sprühnebelbewässerung verändert werden und die veränderten Bedingungen über die Blätter des Strecklings diesen intensiv belasten und Stoffwechselaktivitäten auslösen, die in der Phase der Regeneration unerwünscht sind. Nachteilig ist ferner bei der Bewässerung von oben, daß es - abhängig von der Qualität des verwendeten Wassers - dazu kommen kann, daß sich auf den Blättern Beläge bilden, die wachstumsstörend sind, wobei darüber hinaus durch den ständigen Feuchtigkeitsfilm auf den Blättern die Fäulnis- und Infektionsgefahr vergrößert wird. Eventuelle Spritzbelagschutzmaßnahmen werden in ihrer zeitlichen Wirkung durch Abwaschen begrenzt und die Gefahren gegenseitiger Ansteckungen mit Bakterien sowie Pilzbefall vergrößert. Insbesondere können zu hohe Luftfeuchtigkeitswerte während oder kurz nach dem eigentlichen Sprühvorgang auftreten, die bei bestimmten Stecklingen, wie Pelargonien-Stecklingen, welche viel Luft und folglich keine zu hohe Luftfeuchtigkeit benötigten, zu Schäden führen. Die Schäden können bestehen aus: Abfaulen der alten Blättern im Bestand und als Folge davon Botrytis und die Bildung von Korkflecken, die auf einen Wasserüberschuß im Gewebe zurückzuführen sind.

Die Anzucht der Pflanzenstecklinge wird bislang häufig in Einzeltöpfen vorgenommen. Nachteilig ist dabei, daß der notwendige Abstand von Pflanze zu Pflanze sehr groß ist und die in den Gewächshäusern vorhandenen Tische nur unzureichend belegt wer den können. Es sind deshalb auch Anzuchtgefäße als Systeme bekannt, bei denen Einzeltöpfe zu Topfreihen (Strips) zusammengestellt sind. Trotzdem läßt sich ein nennenswert höherer Flächenbesatz hiermit ebenfalls nicht erzielen. Es sind deshalb Pflanzenanzuchtsplatten aus Kunststoff entwickelt worden, deren Böden zu Töpfen ausgepreßt sind. Alle Töpfe sind mit Abzugslöchern versehen. Nachteiligerweise sind derartige Multitopfplatten ausschließlich vorgesehen und geeignet für eine Sprühnebelbewässerung von oben. Weiterhin besteht auch hier ein großer Platzbedarf. Die Nutzungsintensität durch dichteren Pflanzenbewuchs je Quadratmeter ist aus bewässerungs- und klimaabhängigen Gründen begrenzt. Wird ein größerer Pflanzenbewachs pro Quadratmeter vorgenommen, sind die Wachstumsbedingungen erheblich beeinträchtigt und es entsteht Ausfall.

Der Erfindung liegt in Anbetracht dieses Standes der Technik die Aufgabe zugrunde, unter Meidung der obengenannten Nachteile ein verbessertes Verfahren zur Anzucht von Pflanzenstecklingen und eine geeignete Vorrichtung zur Durchführung dieses Verfahrens zu entwickeln, mit dem die Wurzelbildungs- und Wachstumsbedingungen begünstigt werden und ein höherer Flächenbesatz ermöglicht ist.

Die Aufgabe ist erfindungsgemäß dadurch gelöst, daß die im Substrat angeordneten Pflanzenstecklinge in einer Schale, Wanne oder dgl. flachen Gefäß angeordnet werden, in welchem eine Bewässerung der Pflanzenstecklinge von unten durch Einstellung und Aufrechterhaltung eines bestimmten Wasserstandes im Gefäß vorgenommen wird. Nachdem man bislang im Rahmen der Kultur von durch vegetative Vermehrung erzeugter Pflanzenstecklinge die Sprühnebelbewässerung bzw. das Gießen von oben für notwendig erachtete, ist es überraschend, daß die Anzucht erfolgreich mit einer Bewässerung der Stecklinge auch von unten möglich ist. Bislang war man davon ausgegangen, daß die an der Schnittstelle zwar mögliche Wasseraufnahme derart reduziert ist, daß prinzipiell eine Bewässerung von unten unmöglich ist. Allenfalls kann es bei dem erfindungsgemäßen Verfahren erforderlich sein, Sprühnebel nur solange anzuwenden, bis die Stecklinge turgeszent sind (ca. zwei Tage).

Zweckmäßigerweise wird der Wasserstand im Gefäß automatisch auf einem Wert < 1,0 cm gehalten, wobei das Wasser mit Nährstoffen versetzt sein kann.

Bei der Anzucht von Stecklingen spielt neben dem im Bereich der Regenerationszone erhöhten Bedarf an Wasser der Sauerstoffbedarf eine große Rolle. Überlicherweise wird daher so früh wie möglich gelüftet, werden die Pflanzen weit genug im Abstand voneinander kultiviert und wird über die bislang verwendete Luftbefeuchtung der Wasserbedarf sichergestellt. Demgegenüber schlägt in einer zweckmäßigen Ausgestaltung die Erfindung vor, zusätzlich zu der Bewässerung von unten eine gezielte Belüftung im Bereich des Blattraums der Pflanzenstecklinge, ebenfalls von unte, vorzunehmen, um am Ort der größten Wirksamkeit eine aktive Belüftung - unabhängig von der üblichen Raumentlüftung in Gewächshäusern - vorzunehmen und ein den Wachstumsanforderungen entsprechendes Mikroklima zu schaffen. Hierdurch ist es ermöglicht, einen wesentlich höheren Flächenbesatz als bisher vorzunehmen. Vorteilhafterweise werden die Pflanzenstecklinge in dem Gefäß in parallel zueinander angeordneten Reihen dicht und/oder in Reihen versetzt zueinander und/oder in Reihen mit Abstand in Querrichtung zueinander angeordnet. Die Wahl der Anordnung hängt von der Art der aufzuziehenden Pflanzenstecklinge ab. Immer ist es aber möglich, aufgrund der erfindungsgemäßen Bewässerung und Belüftung eine erhebliche größere Besetzung als bislang vorzunehmen und beispielsweise anstelle von 200 Pflanzenstecklingen pro Quadratmeter einen Flächenbesatz von 800 Pflanzenstecklingen pro Quadratmeter zu erzielen. Die Pflanzenstecklinge haben dann einen Steckabstand zueinander von zwischen 2,5 und 3 cm in der dichten Reihe bzw. zwischen 5 und 6 cm in der versetzten Reihenanordnung. Auch kann als Substrat ein kubischer oder rechteckiger Schaumstoff- bzw. Faserkörper verwendet werden, dessen Kantenlänge 2,5 cm bis 3 cm beträgt.

Die erfindungsgemäße Vorrichtung zur Durchführung des obenbeschriebenen erfindungsgemäßen Verfahrens ist gekennzeichnet durch eine Schale oder dgl. Gefäß mit einer Wasserzufuhr zur Ausbildung und automatischen Aufrechterhaltung eines vorgegebenen Wasserstands und einer Belüftungseinrichtung, deren Luftaustritt etwa in Höhe der Substratoberfläche angeordnet ist. Zur Einstellung des Wasserstandes ist vorzugsweise vorgesehen, zumindest eine Seitenwand des Gefäßes mit einer Überlauföffnung über Bodenniveau zu versehen. Um darüber hinaus die Wasserzufuhr zu den einzelnen Substraten zu verbessern, ist in einer zweckmäßigen Ausgestaltung der erfindungsgemäßen Vorrichtung vorgeschlagen, den Boden des Gefäßes mit Erhöhungen, vorzugsweise parallel mit Abstand zueinander angeordneten Rippen zu versehen, um miteinander kommunizierende Wasserkanäle auszubilden, über denen die Substrate angeordnet sind. Diese Ausgestaltung erhöht darüber hinaus die Festigkeit und Steifheit des Gefäßes und verbessert damit die Handhabung.

Um im Rahmen der Belüftung eine Luftzufuhr unterhalb der Pflanzenblätter zu gewährleisten, ist es vorteilhaft, im Boden des Gefäßes mehrere Reihen von parallel und mit Abstand zueinander angeordneten Belüftungsschlitzen auszubilden, deren Seitenbegrenzungen zu Hohlstegen hochgezogen sind, welche mit ih rer Öffnung etwa in der Höhe der Oberkante der eingesetzten Substrate enden. Damit auch eine gute Belüftung gegeben ist, wenn mehrere Gefäße im Sinne der Ausbildung eines Pflanzbeetes aneinander gestellt werden, ist vorgesehen, an einander gegenüberliegenden Seitenwänden Vorsprünge derart auszubilden, daß im Bereich zwischen den Vorsprüngen ebenfalls Belüftungsschlitze gegeben sind.

Nach derzeitigen Erkentnissen sind quadratisch ausgebildete Gefäße zu bevorzugen, da hiermit größte Variabilität und größtmöglicher Flächenbesatz sichergestellt wird. Dazu ist das quadratische Gefäß durch drei Reihen von Hohlstegen, die die Belüftungseinrichtung darstellen, in vier Abteilungen unterteilt, in welchen vier, eine Vielzahl von mit Bodenlöchern versehene Substrattöpfe aufweisende Pflanztröge eingesetzt sind. Diese Pflanztröge lassen sich nach vollendeter Anzucht in einfacher Weise aus dem Gefäß herausnehmen und als Versandbehälter benutzen, so daß als zusätzlicher Vorteil die leichte Handhabung ohne Umpacken oder Umtopfen vom Erzeuger bis zum Verbraucher zu erwähnen sind.

Die Substrattöpfe sind vorzugsweise als Kuben einer Größe ausgebildet, in die die Substrate mit einem geringen umlaufenden Wandabstand einsetzbar sind, um eine umgebende Luftschicht auszubilden, die die Wurzelbildung an den Pflanzenstecklingen begünstigt. Der Ersatz des im Rahmen der Anzucht verbrauchten Wassers findet vorteilhafterweise mit einer Tröpfchenbewässerungsanlage statt: die Steuerung für Beginn und Ende der Bewässerung werden über eine Gewichtswaage und angeschlossene Magnetventile reguliert.

Insgesamt wird mit der Erfindung erreicht, daß ein wesentlich höherer Flächenbesatz vorgenommen werden kann und dennoch gewährleistet ist, daß die Anzucht hygienisch einwandfrei, d.h. ohne Krankheiten und Infektionen durchführbar ist. Durch den geringen Wasserverbrauch und die gezielte Belüftung läßt sich eine erhebliche Energieersparnis bei vollautomatischen Aufzuchtbedingungen erzielen. Durch die optimalen Kulturbedingungen wird eine wesentlich verkürzte Kulturzeit erreicht und die Qualität der Pflanze einheitlich gestaltet.

Schließlich ist die leichte Handhabung sowohl der Gefäße als auch der Pflanztröge zu erwähnen, die auch gleichzeitig Versandbehälter sind.

Weitere Einzelheiten, Merkmale und Vorteile des Gegenstandes der Erfindung ergeben sich aus der nachfolgenden Beschreibung der zugehörigen Zeichnung, in der ein Anzuchtgefäß schematisch dargestellt ist.

In der Zeichnung zeigt:

Fig. 1 ein Bewässerungsgefäß in der Draufsicht.

Fig. 2 einen Schnitt gemäß Linie B-B der Fig. 1,

Fig. 3 einen Schnitt gemäß Linie A-A des Gefäßes der Fig. 1 und

Fig. 4 eine perspektivische Darstellung eines in das Gefäß der Fig. 1 einsetzbaren Pflanztrogs.

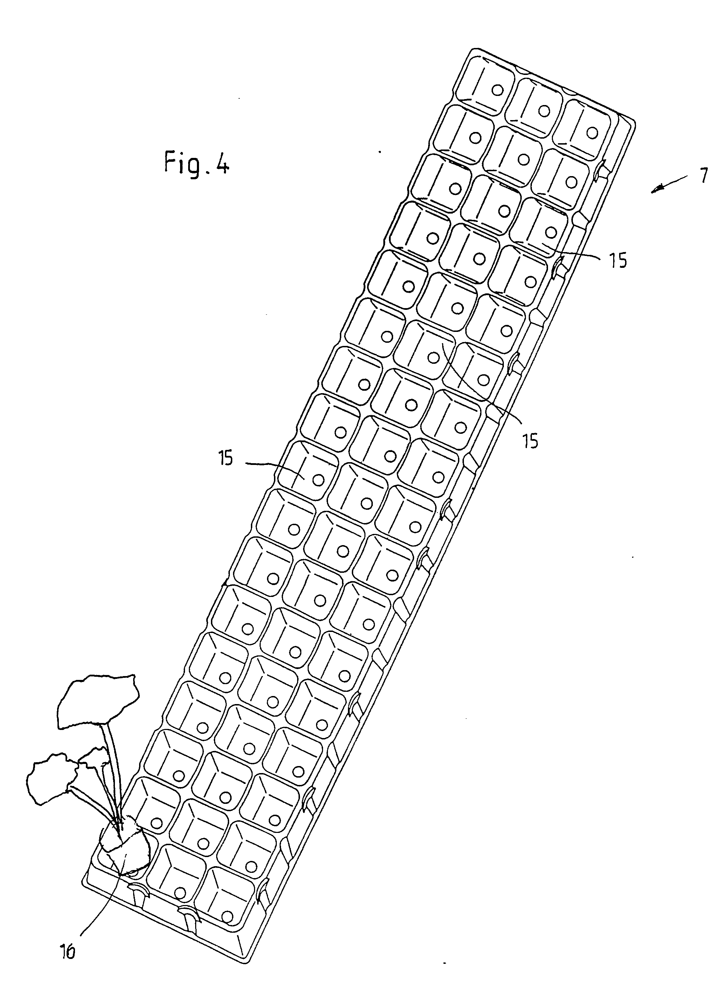

Das Gefäß 1 stellt eine flache, aus Kunststoff gespritzte Schale mit einer Seitenlänge von 470 mm dar. Sein Boden 2 ist mit rippenartigen Erhöhungen 3 versehen, die derart ausgebildet sind, daß sowohl zwischen den einzelnen Rippen 3 als auch zwischen den seitlichen Begrenzungswänden des Gefäßes 1 Kanäle 4 für das zur Bewässerung vorgesehene Wasser ausgebildet sind. Eine umlaufende Stufe 5 steht im Übergangsbereich zu den Seitenwänden 6 des Gefäßes im gleichen Maße über den Boden 2 hoch wie die Rippen 3. Durch die Stufe 5 wird gemeinsam mit den an der Oberseite flach ausgebildeten Rippen 3 eine Plattform für die in das Gefäß 1 einzusetzenden Pflanztröge 7 gemäß Fig. 4 der Zeichnung geschaffen.

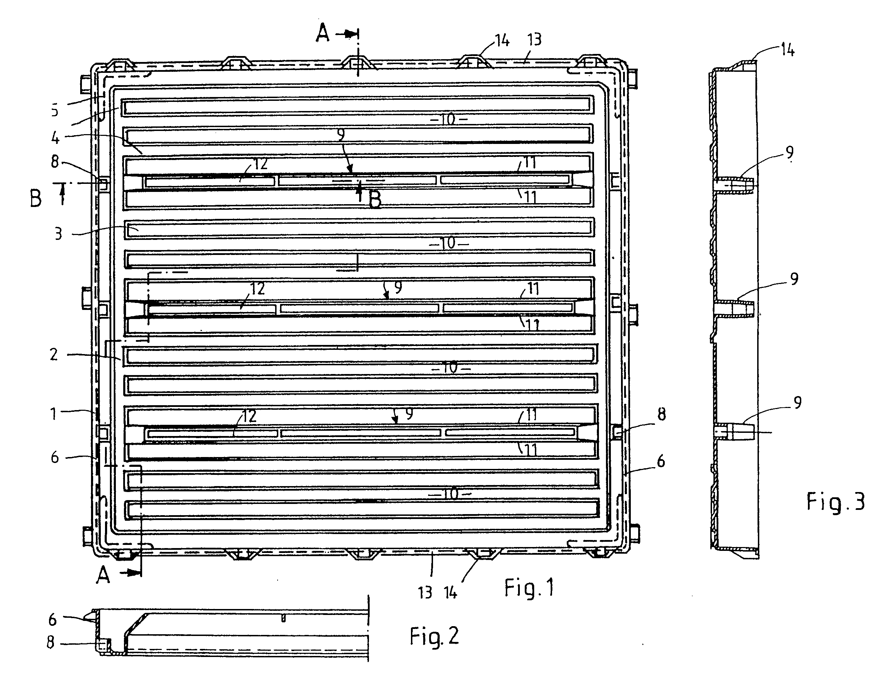

Die einander gegenüberliegenden Seitenwände 6 des Gefäßes 1 weisen, wie Fig. 2 der Zeichnung verdeutlicht, jeweils drei Überlauföffnungen 8 auf, die einen konstanten Wasserstand im Gefäß 1 von etwa 10 mm Höhe gewährleisten. Als Wasserzufuhr ist eine nicht dargestellte, an sich bekannte Tröpfchenbewässerungsanlage vorgesehen, mit der verbrauchtes Wasser unter Konstanthaltung des Wasserspiegels ersetzbar ist, ohne daß zu dem Mittel einer Bewässerung von oben gegriffen werden muß.

Das Gefäß 1 ist durch parallel zu den Rippen 3 sich erstreckende Belüftungsstege 9 in vier Abteilungen 10 unterteilt, in die entsprechend vier Pflanztröge 7 einsetzbar sind. Die Belüftungsstege 9 sind durch hochgezogene Seitenbegrenzungen 11 gebildet, die mit ihren Öffnungen etwa in der Höhe der Oberkante der eingesetzten Substrate unterhalb der Blätter der Pflanzenstecklinge enden und schlitzförmige Belüftungsöffnungen 12 für einen Luftdurchtritt von unten nach oben bilden. Aus Fig. 3 der Zeichnung sind die entsprechenden Bodenöffnungen der Belüftungsstege 9 ersichtlich. Ebenfalls zum Zwecke der Belüftung sind die parallel zu den Belüftungsstegen 9 verlaufenden Seitenwände 13 des Gefäßes 1 mit Vorsprüngen 14 ausgerüstet, die mit entsprechenden Vorsprüngen eines weiteren Gefäßes korrespondieren und bei Aneinanderpositionierung Belüftungsöffnungen im Übergangsbereich von einem Gefäß zum anderen bilden.

Fig. 4 der Zeichnung zeigt einen in einer Abteilung 10 des Gefäßes 1 einsetzbaren Pflanztrog 7 in perspektivischer Ansicht. Der Pflanztrog 7 besteht aus tiefgezogenem Kunststoff und weist 3 x 17 = 51 prismatische oder kubische Pflanztöpfe 15 auf. Der Boden jedes einzelnen Pflanztopfes 15 ist mit einer Öffnung für den Wasserdurchtritt versehen.

Zur Kultur von Pflanzenstecklingen werden Schaum-Substrate prismatischer, runder oder kubischer Form verwendet (im gezeichneten Ausführungsbeispiel: kubische Form), die geringfügig kleiner als die Pflanztöpfe sind und nach dem Einsetzten in diese einen Luftspalt zu den umgebenden Wandungen der Pflanztöpfe freilassen. Die mit Stecklingen versehenen Substrate 16 werden entweder in dichter Reihe in jeden einzelnen Pflanztopf 15 oder in Abhängigkeit von der Art des zu bewurzelnden Stecklings in parallelen Reihen mit Abstand zueinander oder versetzt zueinander in den Pflanztrögen 7 angeordnet und vier solcher Pflanztröge jeweils in ein Gefäß 1 eingesetzt. Die Gefäße 1 werden wiederum auf Gewächshaustischen zu deren vollständiger Belegung angeordnet. Es wird sodann über die Tröpfchenbewässerungsanlage Wasser bis zur vorgesehenen Höhe in jedes Gefäß eingefüllt und die Tröpfchenbewässerungsanlage derart eingestellt, daß sie automatisch über eine Waage entsprechend dem Wasserverbrauch gesteuert tröpfchenweisen Ersatz zur Aufrechterhaltung des gewünschten Wasserstandes in jedes Gefäß einbringt. Die Wasserkanäle 4 befinden sich direkt unter den Substraten, so daß ihre Wasseraufnahme von unten unbeeinträchtigt ist. Eine Bewässerung von oben findet nicht statt. Durch die Belüftungsstege 9 wird gezielt Luft in den Unter den Blättern der Pflanzenstecklinge vorliegenden räumlichen Bereich eingeführt und damit an der wichtigsten Stelle für eine aktive Belüftung gesorgt.

Aufgrund dieser Maßnahmen ergibt sich eine wesentlich kürzere Kulturzeit als bisher bekannt, wobei auch ein verringerter Wasserverbrauch zu verzeichnen ist. Vier Gefäße 1 der dargestellten Art ergeben einen Quadratmeter, so daß der Flächenbesatz pro Quadratmeter im vorliegenden Ausführungsbeispiel 816 Substrate mit Pflanzenstecklingen erreicht.

Nach Beendigung der Bewurzelung können die Pflanztröge 7 in ihrer Gesamtheit zur Weiterkultur aus den Gefäßen 1 herausgenommen werden und zum Abnehmer verschickt werden, der die weitere Kultur bis zur Fertigpflanze durchführt. Eine Einzelhandhabung zur besonderen Verpackung ist damit vermieden, da jeder Pflanztrog gleichzeitig Versandbehälter für die bewurzelten Stecklinge ist.

Bezugszeichenliste

1 Gefäß
2 Boden
3 Rippen
4 Kanäle
5 Stufe
6 Seitenwand
7 Pflanztröge
8 Überlauföffnungen
9 Belüftungsstege
10 Abteilung
11 Seitenbegrenzung
12 Belüftungsöffnungen
13 Seitenwände
14 Vorsprünge
15 Substrattöpfe
16 Substrate

Ansprüche

1. Verfahren zur Kultur von durch vegetative Vermehrung erzeugter Pflanzenstecklinge, die mit ihrer Basis in je ein Substrat gesteckt und darin bewurzelt werden, wobei als Wachstumsparameter Lichtmengen, Lichtwerte, Temperatur, Lüftung, Luftfeuchtigkeit, Ernährung und Bewässerung gesteuert werden,
**dadurch gekennzeichnet,**
daß die im Substrat (16) angeordneten Pflanzenstecklinge in einer Schale, Wanne oder dgl. flachen Gefäß (1) angeordnet werden, in welchem eine Bewässerung der Pflanzenstecklinge von unten durch Einstellung und Aufrechterhaltung eines bestimmten Wasserstandes im Gefäß (1) vorgenommen wird.

2. Verfahren nach Anspruch 1, dadurch gekennzeichnet, daß der Wasserstand im Gefäß (1) automatisch auf einen Wert < 1 cm gehalten wird.

3. Verfahren nach Anspruch 1 und 2, dadurch gekennzeichnet, daß das Wasser mit Nährstoffen versetzt wird.

4. Verfahren nach einem der Ansprüche 1 bis 3, dadurch gekennzeichnet, daß eine gezielte Belüftung im Bereich des Blattraums der Pflanzenstecklinge von unten vorgenommen wird.

5. Verfahren nach einem der Ansprüche 1 bis 4, dadurch gekennzeichnet, daß die Pflanzenstecklinge in dem Gefäß (1) in parallel zueinander angeordneten Reihen dicht und/oder in Reihen versetzt zueinander und/oder in Reihen mit Abstand in Querrichtung zueinander angeordnet werden.

6. Verfahren nach einem der Ansprüche 1 bis 5, dadurch gekennzeichnet, daß ein Steckabstand der Pflanzenstecklinge untereinander zwischen 1,0 cm und 3 cm der dichten Reihe bzw. zwischen 2 cm und 6 cm in der versetzten Reihenanordnung gewählt wird.

7. Verfahren nach einem der Ansprüche 1 bis 6, dadurch gekennzeichnet, daß die Luftfeuchtigkeit bei einer Temperatur zwischen 16° C und 24° C auf 70 % bis 95 % eingestellt wird und daß mit fortschreitender Kultur eine Temperatur-Absenkung vorgenommen wird.

8. Verfahren nach einem der Ansprüche 1 bis 7, dadurch gekennzeichnet, daß als Substrat ein kubischer oder prismatischer oder runder Schaumstoff- oder Faserkörper verwendet wird.

9. Vorrichtung zur Durchführung des Verfahrens zur Kultur von Pflanzenstecklingen gemäß einem der Ansprüche 1 bis 8, gekennzeichnet durch eine Schale oder dgl. Gefäß (1) mit einer Wasserzufuhr zur Ausbildung und automatischen Aufrechterhaltung eines vorgegebenen Wasserstands und einer Belüftungseinrichtung, deren Luftaustritt etwa in Höhe der Substratoberfläche angeordnet ist.

10. Vorrichtung nach Anspruch 9, dadurch gekennzeichnet, daß zumindest eine Seitenwand (6) des Gefäßes (1) mit einer Überlauföffnung (8) über Bodenniveau versehen ist.

11. Vorrichtung nach Anspruch 9 und 10, dadurch gekennzeichnet, daß der Boden (2) des Gefäßes (1) mit Erhöhungen, vorzugsweise parallel mit Abstand zueinander angeordneten Rippen (3) versehen ist, zwischen denen kommunizierende Wasserkanäle (4) ausgebildet sind, über denen die Substrate (16) angeordnet sind.

12. Vorrichtung nach einem der Ansprüche 9 bis 11, dadurch gekennzeichnet, daß zur Belüftung im Boden (2) des Gefäßes (1) mehrere Reihen von parallel und mit Abstand zueinander angeordneten Belüftungsschlitzen ausgebildet sind, deren Seitenbegrenzungen (11) zu Hohlstegen (9) hochgezogen sind, welche mit ihrer Öffnung (12) etwa in Höhe der Oberkante der eingesetzten Substrate (16) enden.

13. Vorrichtung nach einem der Ansprüche 9 bis 12, dadurch gekennzeichnet, daß an einander gegenüberliegenden Seitenwänden (13) des Gefäßes (1) Vorsprünge (14) derart ausgebildet sind, daß im Bereich zwischen den Vorsprüngen Belüftungsschlitze gegeben sind, wenn mehrere Gefäße nebeneinander aufgestellt sind.

14. Vorrichtung nach einem der Ansprüche 9 bis 13, dadurch gekennzeichnet, daß das Gefäß (1) quadratisch ist und durch drei Reihen von Hohlstegen (9) in vier Abteilungen (10) unterteilt ist, in denen vier Pflanztröge (7) eingesetzt sind, in denen eine Vielzahl mit Bodenlöchern versehene Substrattöpfe (15) ausgebildet sind.

15. Vorrichtung nach einem der Ansprüche 9 bis 14, dadurch gekennzeichnet, daß die Substrattöpfe (15) Kuben oder Prismen oder Walzen einer Größe sind, in die die Substrate (16) mit einem geringen umlaufenden Wandabstand einsetzbar sind.

16. Vorrichtung nach einem der Ansprüche 1 bis 15, dadurch gekennzeichnet, daß das Gefäß (1) aus gespritztem Kunststoff und die Pflanztröge (7) aus tiefgezogenem Kunststoff bestehen.

17. Vorrichtung nach einem der Ansprüche 1 bis 16, dadurch gekennzeichnet, daß für den Ersatz des verbrauchten Wassers eine Tröpfchenbewässerungsanlage vorgesehen ist, welche die Ein- und Ausschaltbefehle über eine Gewichtswaage erhält, welche Magnetventile betätigt.

A →

14  13

5

4

—10—

9

12    11

8

11

B

3

—10—

12    9    11

2

11

1

—10—

8

12    9    11

6

11

6

—10—

13  14    Fig.1

A →

Fig.2

6

8

14

9

9

9

9

8

Fig.3

EP 0 321 741 A1

Fig.4

7

15

15

15

16

| | | Europäisches Patentamt | EUROPÄISCHER RECHERCHENBERICHT | Nummer der Anmeldung |
|---|---|---|---|---|

EP  88 11 9844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-142989 (APPLIED AEROPONICS)<br>* Seite 5, Zeile 16 - Zeile 19 *<br>* Zeile 10 - Seite 24, Zeile 30 *<br>* Seite 15, Zeile 18 - Zeile 21 *<br>* Seite 17, Zeile 26 - Seite 18, Zeile 19;<br>Figuren 2, 3, 4 * | 1-5, 8 | A01G9/10 |
| A | --- | 7, 15 | |
| Y | US-A-4248013 (ALLEN)<br>* Spalte 2, Zeile 42 - Zeile 43; Anspruch 2;<br>Figuren 1-5 * | 1-5,<br>8-12, 17 | |
| Y | GB-A-2007485 (GENERAL ELECTRIC)<br>* Seite 1, Zeile 4 - Zeile 56 *<br>* Seite 2, Zeile 59 - Zeile 86; Figur 1 *<br>--- | 2 | |
| Y | US-A-4597222 (ROODE)<br>* Spalte 3, Zeile 31 - Zeile 51; Figur 5 *<br>--- | 4, 5,<br>9-12 | |
| Y | EP-A-210702 (FLOWMAGIC)<br>* Spalte 3, Zeile 40 - Spalte 4, Zeile 23;<br>Figuren 2, 4, 5, 7 * | 11, 12 | |
| A | --- | 16 | RECHERCHIERTE SACHGEBIETE (Int. Cl.4) |
| Y | GB-A-1192424 (RIDDIFORD)<br>* Anspruch 1; Figuren 1, 2 *<br>--- | 17 | A01G |
| A | US-A-4495725 (TALBOTT)<br>* Spalte 4, Zeile 19 - Zeile 22; Figuren 1-4 *<br>--- | 5, 6,<br>14-16 | |
| A | DE-B-1582864 (SIMMON)<br>* Spalte 2, Zeile 64 - Spalte 3, Zeile 7;<br>Figuren 1-4 *<br>----- | 13 | |

Der vorliegende Recherchenbericht wurde für alle Patentansprüche erstellt

| Recherchenort | Abschlußdatum der Recherche | Prüfer |
|---|---|---|
| DEN HAAG | 27 FEBRUAR 1989 | HERYGERS J.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)